# EUROPEAN PATENT APPLICATION

(11) **EP 4 600 203 A1**
(43) Date of publication of application: **13.08.2025**
(21) Application number: 24156192.7
(22) Date of filing: 07.02.2024
(51) Int. Cl.: C01B 3/02, C01B 3/50, C25B 1/04

(54) **SYSTEM AND PROCESS FOR THE COMBINED PRODUCTION OF AMMONIA AND HYDROGEN**

(71) Applicant: Yara International ASA, 0277 Oslo (NO)
(72) Inventor: Van Vooren, Roel, 9940 Ertvelde (BE); Versteele, Wim, 9961 Boekhoute (BE); De Weweire, Arvid, 4541 HJ Sluiskil (NL)
(74) Representative: De Clercq & Partners

(57) **Abstract**

The present disclosure provides an improved ammonia-producing plant and process for the simultaneous production of hydrogen and ammonia as end products, by integrating a hydrogen separation unit into an ammonia-producing plant. More in particular, the present disclosure provides an ammonia production plant comprising (a) a reforming section, (b) a purification section, downstream of the reforming section, and (c) an ammonia synthesis section, downstream of the purification section, wherein the plant further comprises (d) a hydrogen separation unit, wherein the hydrogen separation unit has an inlet for a hydrogen-containing gas stream, a first outlet for a pure hydrogen gas and a second outlet for a tail gas, particularly wherein the inlet of the hydrogen separation unit is in fluid communication with a hydrogen-containing gas stream in the purification section and/or in the ammonia synthesis section, and/or with a hydrogen-containing gas stream between the purification section and the ammonia synthesis section of the ammonia production plant, and, particularly, wherein the second outlet is in fluid communication with the reforming section and/or with the purification section of the ammonia production plant.

## Description

### Field

The present disclosure generally relates to an industrial chemical plant equipped with a hydrogen production system. In particular, the present disclosure concerns an ammonia-producing system or process with improved flexibility in terms of the resources used and the products produced by the system or process.

### Background

In the front end of a conventional ammonia-producing plant, hydrogen is produced out of fossil sources, such as natural gas, or non-fossil sources, such as biomethane for example. In particular, a typical modern ammonia-producing plant comprises three main sections, i.e. a reforming section, wherein natural gas (i.e. methane) or LPG (liquefied petroleum gas such as propane and butane) or petroleum naphtha is converted into a hydrogen-containing gas; a purification section, wherein the hydrogen-containing gas stream is further purified; and an ammonia synthesis section, wherein hydrogen is then catalytically combined with nitrogen to produce ammonia through the Haber-Bosch process.

Starting with a feedstock for natural gas, the first step of the process used in the production of hydrogen is to remove sulfur compounds from the natural gas because sulfur deactivates the catalysts used in the following steps. In a desulfurization unit, sulfur compounds are typically converted into gaseous hydrogen sulfide by catalytic hydrogenation.

The sulfur-free natural gas feedstock is then subjected to a catalytic steam reforming step, in the reforming section, to form hydrogen and carbon monoxide.

CH₄ + H₂O → CO + 3H₂

The reforming section typically comprises one or more reforming units, such as a primary and secondary reformer, a pre-reformer, and/or an autothermal reformer. The steam reforming reaction is highly endothermic, and a large amount of heat must be added to the reactor to maintain a constant temperature. Thus, a reformer unit, particularly the primary reformer, consists of a furnace or burners, usually fueled by natural gas and waste gases from the process, and a reactor.

The hydrogen-containing process gas stream leaving the reforming section is further purified in a purification section. The purification section typically comprises several purification steps or units. Several different configurations of the purification section with a different combination of purification units are known. Purification steps or units may be selected from shift conversion, carbon dioxide removal, methanation, drying in a molecular sieve bed, and/or a liquid nitrogen flush in a cold box. In the purification section, the CO, CO₂ and CH₄ together with the excess of N₂ (if present) is eliminated so that the gas stream at the outlet of the purification section, also referred to as the "syngas", only contains hydrogen and nitrogen with the required ratio of H₂/N₂=3 for ammonia synthesis.

In the catalytic shift conversion, carried out in one or more shift reactors, generally first in a high-temperature shift reactor operating at a temperature between 340 and 420 °C, and subsequently in a low-temperature shift reactor operating at a temperature between 190 and 220 °C, the carbon monoxide is converted into carbon dioxide and more hydrogen.

CO + H₂O → CO₂ + H₂

The carbon dioxide is then removed in a CO₂ removal unit, either by absorption in suitable solutions, such as an aqueous amine solution or potassium carbonate, or by adsorption into pressure swing adsorbers (PSA or pressure swing adsorption) using solid adsorption media.

The carbon dioxide depleted hydrogen-containing stream is further purified in one or more further purification units, in particular to separate non-hydrogen and hydrogen gas, such as by a liquid nitrogen wash in a liquid nitrogen wash unit or a cold box unit, and/or to convert oxides harmful to the ammonia converter into non-oxides, such as in a methanation unit.

In particular, the hydrogen-rich stream leaving the CO₂ removal unit may be catalytically methanized in a methanation unit (hereinafter also referred to as a methanator) to remove any small residual amounts of carbon monoxide or carbon dioxide from the hydrogen.

CO + 3H₂ → CH₄ + H₂O

CO₂ + 4H₂ → CH₄ +2H₂O

When washing with liquid nitrogen, traces of solvents (water, methanol), carbon dioxide, and other compounds are first removed in an adsorber unit comprising molecular sieves, and the resulting hydrogen-rich gas is further scrubbed in a cold box with high-pressure and partially liquefied nitrogen, usually fed by an air separation unit, eliminating further impurities, such as argon and methane.

To produce the desired final product ammonia, the syngas exiting the purification section is provided to the ammonia synthesis section, particularly following compression in a syngas compressor, typically a multistage syngas compressor. The hydrogen is then catalytically reacted with nitrogen to form anhydrous liquid ammonia. This step is known as the ammonia synthesis loop - also known as the Haber-Bosch process.

The hydrogen production system, comprising a desulphurization unit, the reforming section with one or more reformer units, in particular the primary and secondary reformer units, and the purification section with one or more of the shift reactors, the CO₂ removal unit, the methanation unit, the molecular sieve adsorber and/or the cold box or cooler, constitutes the "front" or "front end" of an ammonia production unit or plant, while the ammonia synthesis loop constitutes the "back" or "back end" of an ammonia production unit or plant.

The use of fossil sources to produce hydrogen in the front end contributes to the large carbon footprint of the ammonia production in traditional ammonia producing plants. In the context of a further decarbonization of industrial production, many initiatives are currently being developed focusing, in general, on renewable and low-carbon hydrogen, and, in particular, on the hydrogen pipeline infrastructure or hydrogen pipeline network needed for transporting the hydrogen. It is understood that the hydrogen in such hydrogen network will be mostly green hydrogen, particularly produced by electrolysis of water wherein the electrical power needed for the electrolysis is generated by the wind or the sun. The hydrogen in the hydrogen network can thus be seen as a green, carbon-free alternative source of hydrogen for the use of fossil sources in the production of ammonia.

However, the hydrogen network needs to be balanced, which is a problem when most of the energy that is used for feeding hydrogen into a hydrogen pipeline network is dependent on wind and sun, and thus inherently variable. It is further expected that there will not be enough green electrical power available to supply enough hydrogen through electrolysis to the hydrogen pipeline network, especially as the demand for hydrogen will only increase in the future. In this context, cracking green ammonia has been suggested as a second source of hydrogen to be fed in a hydrogen network.

There is thus a need for an improved ammonia production process which can optimally interact with the hydrogen in the hydrogen network.

### Summary

The inventors have developed an improved ammonia production system and process, in general comprising the integration of an ammonia production plant with a hydrogen separation unit, which address one or more of the above-mentioned drawbacks, and which makes it possible for the ammonia plant to produce and export hydrogen. Importantly, in the system and method according to the present disclosure, the production and export of hydrogen occurs simultaneously with the production and export of ammonia. In particular, in situations with a surplus of renewable power, green hydrogen can be imported from a hydrogen network instead of producing the hydrogen out of a fossil source. This will reduce the carbon footprint of ammonia production. In situations with a low supply of renewable power, the system and method for the combined production of ammonia and hydrogen of the present disclosure is able to export hydrogen to a hydrogen network. This will allow to save the energy for converting ammonia to hydrogen to supply the hydrogen network. Advantageously, when combined with carbon capture and storage (CCS) technology for capturing, liquefying and storing the carbon dioxide generated during the hydrogen production, the exported hydrogen is blue hydrogen, which may be considered as low carbon, as the carbon dioxide is not emitted to the atmosphere. The system and process of the present disclosure thus provides a flexible, hybrid system and process which is optimally adapted to the available resources: it allows to import green hydrogen from a hydrogen network, for example during periods of high wind availability and/or during daytime when the sun is shining, and to export hydrogen, particularly blue hydrogen, to a hydrogen network, for example during nighttime when there is no or a reduced green hydrogen production, and to make this changeover possible on short notice and without interruption of the ammonia production. In addition, the export of hydrogen to the hydrogen network contributes to balancing the hydrogen network, and at the same time, will contribute to balancing the electrical grid, as the production of green hydrogen requires a lot of electricity.

A first aspect of the present disclosure provides an ammonia production plant or system comprising
(a) a reforming section, wherein a hydrocarbon gas is converted into a hydrogen-containing process gas;
(b) a purification section, downstream of the reforming section, wherein the hydrogen-containing process gas is gradually purified and converted into a syngas,
(c) an ammonia synthesis section, downstream of the purification section, wherein the syngas is converted into ammonia; and
(d) a hydrogen separation unit, comprising
   (i) an inlet for a hydrogen-containing gas in fluid communication with a hydrogen-containing gas stream in the purification section, with a hydrogen-containing gas stream between the purification section and the ammonia synthesis section, and/or with a hydrogen-containing gas stream in the ammonia synthesis section, for providing a hydrogen-containing gas stream to the hydrogen separation unit;
   (ii) a first outlet for a first hydrogen gas, i.e. a pure hydrogen gas, and
   (iii) a second outlet for a tail gas, particularly wherein the second outlet is in fluid communication with the reforming section and/or with the purification section.

In particular embodiments, the ammonia production plant or system according to the present disclosure further comprising a source of a second hydrogen gas, particularly in fluid communication with the purification section, for providing the second hydrogen gas to the purification section, particularly wherein the source of the second hydrogen gas is an electrolysis unit or a hydrogen network.

In particular embodiments, the inlet for a hydrogen-containing gas of the hydrogen separation unit is in fluid communication with one or more of:
- the syngas between the purification section and the ammonia synthesis section, such as the syngas between the purification section and a syngas compressor and/or the syngas between a first stage and a second stage of a syngas compressor, for providing a part of the syngas to the hydrogen separation unit;
- a partially purified hydrogen-containing process gas downstream of the carbon dioxide removal unit, particularly between the carbon dioxide removal unit and the methanation unit of the purification section, and/or downstream of the methanation unit, such as between the methanation unit and the dryer of the purification section and/or between the dryer and the cold box unit of the purification section, for providing a part of the partially purified hydrogen-containing process gas to the hydrogen separation unit; and/or
- a hydrogen-containing recycle stream and/or a hydrogen-containing purge flow in the ammonia synthesis section.

In particular embodiments, the second outlet of the hydrogen separation is in fluid communication with one or more of:
- a furnace of a reforming unit, for providing the tail gas as fuel to the furnace of the reforming unit, particularly to the furnace of a primary reformer;
- a compressor gas turbine of an air compressor, wherein the air compressor provides air to a reforming unit in the reforming section, for providing the tail gas as fuel to the compressor gas turbine; and/or
- a partially purified hydrogen containing-gas stream in the purification section, particularly, upstream of the cold box, for recycling the tail gas to the purification section.

In particular embodiments, the ammonia production plant or system according to the present disclosure further comprises one or more of:
- a pressure control system in the first outlet of the hydrogen separation unit, for maintaining the pressure in the hydrogen separation unit;
- a pressure or flow control system in the second outlet of hydrogen separation unit; for controlling the pressure or the flow of the tail gas to the reforming section and/or to the purification section;
- a flow control system in the inlet of the hydrogen separation unit, particularly wherein the flow control system is configured to ensure a minimum flow of the syngas through a syngas compressor positioned between the purification section and the ammonia synthesis section; and/or
- a pressure-controlled vent line on the inlet of the hydrogen separation unit, on the first outlet of hydrogen separation unit and on the second outlet of the hydrogen separation unit.

A further related aspect of the present disclosure provides a method for revamping an ammonia production plant, wherein the ammonia production plant comprises
(a) a reforming section, wherein a hydrocarbon gas is converted into a hydrogen-containing process gas;
(b) a purification section, downstream of the reforming section, wherein the hydrogen-containing process gas is gradually purified and converted into a syngas, and
(c) an ammonia synthesis section, downstream of the purification section, wherein the syngas is converted into ammonia;
wherein the revamping method comprises the step of installing a hydrogen separation unit, comprising (i) an inlet for a hydrogen-containing gas in fluid communication with a hydrogen-containing gas stream in the purification section, with a hydrogen-containing gas stream between the purification section and the ammonia synthesis section, and/or with a hydrogen-containing gas stream in the ammonia synthesis section; (ii) a first outlet for a first hydrogen gas, i.e. a pure hydrogen gas, and (iii) a second outlet for a tail gas, particularly wherein the tail gas outlet is in fluid communication with the reforming section and/or with the purification section.

In particular embodiments, the revamping method according to the present disclosure further comprises installing or connecting the purification section to a source of a second hydrogen gas, particularly wherein the source of second hydrogen gas is an electrolysis unit or a hydrogen network.

In particular embodiments of the revamping method according to the present disclosure, a slip stream of the syngas between the purification section and the ammonia synthesis section, such as a slip stream of the syngas between the purification section and the syngas compressor and/or a slip stream of the syngas between a first stage and a second stage of the syngas compressor, is provided to the inlet of the hydrogen separation unit; and/or a slip stream of a partially purified hydrogen-containing process gas in the purification section is provided to the inlet of the hydrogen separation unit; and/or at least part of a hydrogen containing recycle stream and/or a hydrogen containing purge flow in the ammonia synthesis section is provided to the inlet of the hydrogen separation unit.

In particular embodiments of the revamping method according to the present disclosure, the tail gas of the hydrogen separation unit is provided as fuel to a furnace of a reforming unit in the reforming section; and/or - the tail gas of the hydrogen separation unit is provided as fuel to a compressor gas turbine of an air compressor in the reforming section, wherein the air compressor provides air to a reforming unit; and/or the tail gas is recycled to the purification section to recover the hydrogen.

In particular embodiments, the revamping method according to the present disclosure further comprises the installation of one or more of (i) a pressure control system in the first outlet of the hydrogen separation unit, for maintaining the pressure in the hydrogen separation unit; (ii) a pressure or flow control system in the second outlet of the hydrogen separation unit; for controlling the pressure or flow of the tail gas to the reforming section and/or to the purification section; (iii) a flow control system in the inlet of the hydrogen separation unit, particularly wherein the flow control system is configured to ensure a minimum flow of the syngas through a syngas compressor positioned between the purification section and the ammonia synthesis section; and/or (iv) a pressure-controlled vent line on the inlet of the hydrogen separation unit, on the first outlet of the hydrogen separation unit and on the second outlet of the hydrogen separation unit.

A further related aspect of the present disclosure provides a method for the combined production of ammonia and hydrogen, particularly as end products, comprising the steps of:
(a) converting a hydrocarbon gas into a hydrogen-containing process gas in a reforming section of an ammonia production plant;
(b) gradually purifying the hydrogen-containing process gas and converting it into a syngas in a purification section of an ammonia production plant;
(c) converting the syngas into ammonia in an ammonia synthesis section of an ammonia production plant;
characterized in that the method further comprises the step of:
(d) providing a hydrogen-containing gas from the purification section, from a section between the purification section and the ammonia synthesis section and/or from the ammonia synthesis section to a hydrogen separation unit, thereby obtaining a first hydrogen gas, i.e. a pure hydrogen gas, and a tail gas, particularly wherein the tail gas is provided to the reforming section and/or the purification section.

In particular embodiments, in step (d), a slip stream of the syngas between the purification section and the ammonia synthesis section, more in particular a slip stream of the syngas between the purification section and the syngas compressor and/or a slip stream of the syngas between a first stage and a second stage of the syngas compressor, is provided to the hydrogen separation unit; and/or a slip stream of a partially purified hydrogen-containing process gas in the purification section is provided to the hydrogen separation unit; and/or at least part of a hydrogen containing recycle stream and/or a hydrogen containing purge flow in the ammonia synthesis section is provided to the hydrogen separation unit.

In particular embodiments, in step (d), the tail gas of the hydrogen separation unit is provided as fuel to a furnace of a reforming unit in the reforming section; and/or the tail gas of the hydrogen separation unit is provided as fuel to a compressor gas turbine of an air compressor in the reforming section, wherein the air compressor provides air to a reforming unit; and/or the tail gas of the hydrogen separation unit is recycled to the purification section to recover the hydrogen.

### Description of the figures

FIGURE 1 presents a schematic flowsheet of a system/method for the combined production of ammonia and hydrogen according to the present disclosure.
FIGURE 2 shows an embodiment of a system/method for the combined production of ammonia and hydrogen according to the present disclosure, wherein a slipstream of the syngas is provided to a hydrogen separation unit.
FIGURE 3 shows an embodiment of a system/method for the combined production of ammonia and hydrogen according to the present disclosure, wherein a slipstream of the syngas is provided to a hydrogen separation unit.
FIGURE 4 shows an embodiment of a system/method for the combined production of ammonia and hydrogen according to the present disclosure, wherein a slipstream of the syngas and a purge stream from the inert gas removal unit is provided to a hydrogen separation unit.
FIGURE 5 shows an embodiment of a system/method for the combined production of ammonia and hydrogen according to the present disclosure, wherein hydrogen-rich streams of the purification section, upstream of the cold box, are provided to the hydrogen separation unit.
FIGURE 6 shows an embodiment of a system/method for the combined production of ammonia and hydrogen according to the present disclosure, wherein hydrogen-rich streams of the ammonia synthesis section are provided to the hydrogen separation unit.
FIGURE 7 shows an embodiment of a system/method for the combined production of ammonia and hydrogen according to the present disclosure, showing alternative uses for the tail gas coming out of the hydrogen separation unit.

The following reference numerals are used in the description and the figures.
100: reforming section / 110: primary reformer / 120: secondary reformer / 130: air compressor / 200: purification section / 210: shift conversion, in particular the combination of a high-temperature shift converter and a low-temperature shift converter / 220: carbon dioxide removal unit / 230: methanation unit / 240: dryer / 250: cold box / 300: ammonia synthesis section / 310: ammonia converter / 320: ammonia separation unit / 330: inert gas removal unit / 400: hydrogen separation unit / 500: syngas compressor / 600: tail gas compressor / 710, 720, 730: - vent line.

### Detailed description

Before the present system and method of the present disclosure are described, it is noted that this disclosure is not limited to particular systems and methods or combinations described, since such systems and methods and combinations may, of course, vary. It is also to be understood that the terminology used herein is not intended to be limiting, since the scope of the present disclosure will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or openended and do not exclude additional, non-recited members, elements or method steps. It will be appreciated that the terms "comprising", "comprises" and "comprised of" as used herein comprise the terms "consisting of', "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the present disclosure. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g*., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in the present disclosure, including technical and scientific terms, have the meaning as commonly understood by one of ordinary skill in the art to which the present disclosure belongs. By means of further guidance, term definitions are included to better appreciate the teaching of the present disclosure.

In the following passages, different aspects of the present disclosure are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the present disclosure, and form different embodiments, as would be understood by those in the art. For example, in the appended claims, any of the claimed embodiments can be used in any combination.

It is to be understood that other embodiments may be utilised and structural or logical changes may be made without departing from the scope of the present disclosure. The following detailed description, therefore, is not to be taken in a limiting sense, and the scope of the present disclosure is defined by the appended claims.

As used herein, the term "hydrogen-containing" with respect to a gas or gas stream relates to a gas or gas stream comprising at least 10 vol%, at least 20 vol%, at least 30 vol%, at least 40 vol% or at least 50 vol% or more hydrogen. The term "hydrogen-rich" with respect to a gas or gas stream relates to a gas or gas stream comprising at least 50 vol%, particularly at least 60 vol% of hydrogen.

While the main purpose of an ammonia-producing plant is the production, and particularly also the export, of ammonia, the inventors have developed an improved ammonia-producing plant and process for the simultaneous production (and export) of hydrogen and ammonia as end products, by integrating a hydrogen separation unit into an ammonia-producing plant.

A first aspect of the present disclosure generally provides an ammonia production plant or system comprising a reforming section; a purification section, downstream of the reforming section; and an ammonia synthesis section, downstream of the purification section; and further comprising a hydrogen separation unit, configured for the selective separation of hydrogen from a hydrogen-containing or hydrogen-rich gas stream in the ammonia production process, thereby obtaining a hydrogen gas stream, particularly an (essentially) pure hydrogen gas stream, and a tail gas stream having a reduced hydrogen concentration compared to the hydrogen-containing or hydrogen-rich gas stream provided to the hydrogen separation unit. As used herein, the term "pure hydrogen gas" is used interchangeably with the term "first hydrogen gas" and relates to the purified hydrogen gas or gas stream leaving the hydrogen separation unit, having, in general, a higher concentration of hydrogen than the hydrogen-containing gas provided to the hydrogen separation unit.

Ammonia-producing plants and systems, comprising a reforming section, a purification section and ammonia synthesis section, are well-known to the skilled person.

In the reforming section, also referred to as a steam reforming section, a feed gas or process gas comprising hydrocarbons, such as a natural gas or biomethane, is catalytically reacted with water (steam) and converted into a hydrogen-containing process gas, particularly comprising hydrogen and CO. The reforming section comprises one or more reforming units, such as a pre-reformer, a primary and secondary reformer, or an autothermal reformer. The purpose of the pre-reformer is to break down higher hydrocarbons, such as e.g. propane or butane into methane, which allows for more efficient reforming downstream. The primary reformer typically comprises a furnace or multiple burners, provided with a fuel gas, e.g. natural gas, and a reactor, provided with a feed of a gaseous hydrocarbon, e.g. natural gas. The reactor is typically in the form of a plurality of reaction tubes comprising the reforming catalyst, also referred to as catalyst tubes, and is heated by the furnace or the burners. In the secondary reformer, (compressed) air is introduced, to reduce the content of hydrocarbon, particular methane, in the gas mixture by internal combustion, and which also serves to introduce nitrogen in the gas mixture. The hydrogen-containing process gas leaving the reformer section mainly comprises H₂, CO, CO₂, N₂ and CH₄, and is further purified and converted in the purification section.

The purification section comprises multiple purification units, for gradually purifying and converting the hydrogen-containing process gas into syngas. There is a stream of a partially purified hydrogen-containing process gas between the different units in the purification section. In particular, the purification section comprises:
- a shift conversion section, particularly comprising a high-temperature shift reactor operating at a temperature of about 340°C to about 420 °C and a low-temperature shift reactor operating at a temperature of about 190°C to about 220°C, wherein water (steam) reacts with the CO present in the hydrogen-containing process gas, thereby obtaining additional hydrogen and CO₂;
- a CO₂ removal unit, for the removal of the carbon dioxide from the hydrogen-containing process gas generated in the shift conversion section; and
- one or more further purification units, for removing further impurities, particularly impurities which may adversely affect the ammonia synthesis process. In particular, the carbon dioxide depleted hydrogen-containing stream exiting the CO₂ removal unit is further purified by separating non-hydrogen and hydrogen gas, such as by a liquid nitrogen wash, and/or by converting oxides harmful to the ammonia converter into non-oxides, such as in a methanation unit.

In particular, the carbon dioxide depleted hydrogen containing gas may be provided to a methanation unit, wherein the carbon oxides (CO and CO₂) are converted into methane. The treated gas exiting the methanation unit may be subject to further purification steps or may be provided to the ammonia synthesis section.

In a liquid nitrogen wash section or cold box, gaseous high-pressure nitrogen is partially liquefied and is used as a washing agent to wash out impurities, such as argon, and methane, from the hydrogen-containing process gas, for instance the carbon dioxide depleted hydrogen containing gas exiting the CO₂ removal unit or the treated gas exiting the methanation unit, and to liquefy excess nitrogen. When washing with liquid nitrogen, traces of solvents (water, methanol), carbon dioxide, and other compounds are first removed in an adsorber unit comprising molecular sieves, also referred to as the dryer, and the resulting hydrogen-rich gas is further scrubbed in a cold box with high-pressure and partially liquefied nitrogen, usually fed by an air separation unit, eliminating further impurities, such as argon and methane.

Waste gas from the purification section is typically used as a fuel source for the furnace or burners in the reforming section.

The hydrogen-rich gas stream exiting the purification section is also referred to as "syngas" and comprises, particularly essentially consists of, hydrogen and nitrogen, in a 3:1 molar ratio. In the ammonia synthesis section, the syngas is converted into ammonia. In particular, the syngas exiting the purification section is first compressed in a syngas compressor comprising multiple compression stages, and is then provided to the ammonia synthesis section and converted into ammonia. First, the hydrogen and nitrogen of the syngas are catalytically reacted in an ammonia converter, resulting in a gas mixture comprising ammonia and unreacted syngas. In an ammonia separator unit, ammonia is separated from the unreacted syngas, which is recycled back to the syngas compressor/the ammonia converter. An inert gas removal unit is provided with a slip stream of the reacted syngas to avoid accumulation of inert gaseous compounds, with the purge stream comprising the inert gaseous compounds typically being used as fuel for the burners of the primary reformer.

It is understood that the different sections and units of the ammonia producing plant are connected by suitable connecting means or lines, such as pipes.

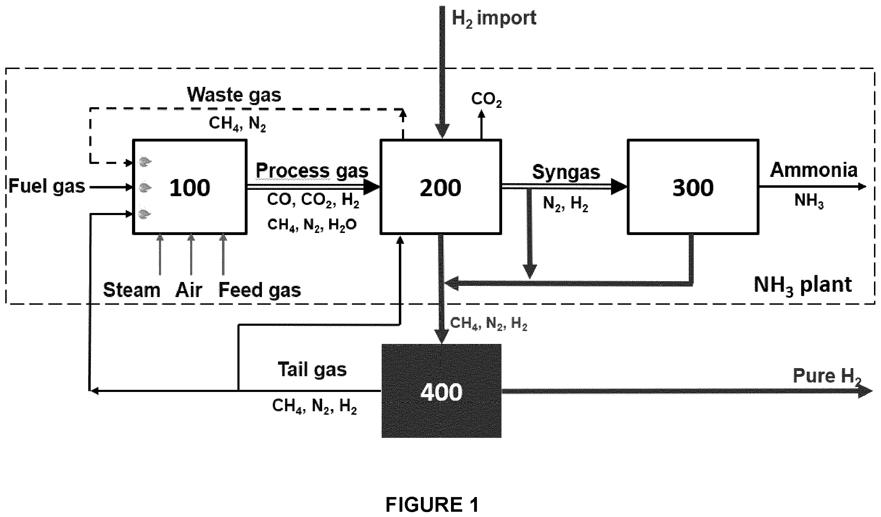

Referring to Figure 1, the present disclosure particularly provides an ammonia production plant or system comprising (a) a reforming section, wherein a hydrocarbon gas is converted into a hydrogen-containing process gas; (b) a purification section, downstream of the reforming section, wherein the hydrogen-containing process gas is gradually purified and converted into a syngas, and (c) an ammonia synthesis section, downstream of the purification section, wherein the syngas is converted into ammonia; wherein the plant or system further comprises (d) a hydrogen separation unit, wherein the hydrogen separation unit has an inlet for a hydrogen-containing gas stream, a first outlet for a pure hydrogen gas and a second outlet for a tail gas, particularly wherein the inlet of the hydrogen separation unit is in fluid communication with or connected to a hydrogen-containing gas stream in the purification section, in fluid communication with or connected to a hydrogen-containing gas stream between the purification and ammonia synthesis section, and/or in fluid communication with or connected to a hydrogen-containing gas stream in the ammonia synthesis section of the ammonia producing plant, for providing a hydrogen-containing gas stream, particularly a hydrogen-rich gas stream, to the hydrogen separation unit, and particularly wherein the second outlet is in fluid communication with or connected to the reforming section and/or with the purification section of the ammonia synthesis unit.

The technology used in the hydrogen separation unit is not particularly limited. In certain embodiments, the hydrogen separation unit comprises a membrane-based hydrogen separation unit comprising a hydrogen separation membrane. Suitable hydrogen separation membranes are known by the skilled person.

In particular embodiments, the hydrogen separation unit comprises a pressure swing adsorption unit or PSA-unit, i.e. a pressure swing adsorption-based (PSA-based) hydrogen separation unit comprising a solid adsorbent media. Advantageously, a PSA-unit is well suited to the conditions, particular pressure and hydrogen concentration, of the hydrogen-containing gas stream in the front end of an ammonia production plant and to the conditions in a hydrogen network or hydrogen grid. When a pressurized hydrogen-containing gas stream, such as originating from the purification section of an ammonia-producing plant, is provided to a PSA-unit, the purified hydrogen stream exiting the PSA-unit is available at high pressure as well, which is required to export the hydrogen to a hydrogen network or grid. In particular embodiments, the hydrogen separation unit, particularly the PSA unit comprises a buffer volume, such as a mixing drum, for reducing and avoiding flow and pressure fluctuations in the tail gas stream, and for homogenizing the composition of the tail gas. Advantageously, a PSA unit provides a highly pure hydrogen gas stream. The minimum concentration of hydrogen in the pure hydrogen gas outlet of the PSA unit is typically >99.5 vol%. If a lower hydrogen concentration is satisfactory for the end user, then part of the hydrogen-containing gas coming from the ammonia plant and provided to the PSA unit can bypass the PSA unit and be directly added to the pure hydrogen gas outlet of the PSA unit to obtain the required purity of the hydrogen.

In certain embodiments, the hydrogen separation unit can also be a combination of a membrane-based separation unit with a PSA unit. This can be advantageous when the hydrogen concentration in the feed to the hydrogen separation unit is low.

The produced, (essentially) pure hydrogen by the hybrid ammonia-producing plant according to the present disclosure, particularly by the hydrogen separation unit thereof, can be exported to a hydrogen network, particularly to an external, national or international hydrogen grid. The hybrid ammonia-producing plant according to the present disclosure may thus contribute to balancing a hydrogen network or hydrogen grid. As the generation of green hydrogen requires a lot of renewable electricity, balancing the hydrogen network or grid will also contribute to balancing the electricity grid. Advantageously, by combining the carbon dioxide removal unit with carbon capture and storage systems and technology, for capturing and/or liquefying and storing the carbon dioxide removed from the hydrogen-containing gas stream in the carbon dioxide removal unit, the generation of hydrogen in the ammonia-production plant according to the present disclosure has much reduced carbon emissions, resulting in low carbon hydrogen. Accordingly, blue hydrogen can be provided to a hydrogen network or hydrogen grid.

In particular embodiments, the ammonia production plant according to the present disclosure may further comprise a source of a second hydrogen gas, particularly a source of a green hydrogen gas, such as an electrolysis unit or a hydrogen network. In certain embodiments, the ammonia production plant according to the present disclosure may be further configured to import hydrogen, particularly green hydrogen, and may be in fluid communication with or connected to a hydrogen network, such as an external, national or international hydrogen grid. Advantageously, this allows the use of (green) hydrogen from the hydrogen network or hydrogen grid, and less natural gas or other fossil-based sources are needed in the production of ammonia. In particular embodiments, the source of a second hydrogen gas is in fluid communication or connected to the purification section of the ammonia plant, for providing the second hydrogen gas to the purification section. The tie-in point of this second hydrogen gas into the purification section can be upstream of the high/low temperature shift convertor, upstream of the CO2 removal unit, upstream of the methanation unit, upstream of the dryer or upstream of the cold box, depending on the quality of the imported hydrogen. Moreover, the ammonia production plant according to the present disclosure may thus be fully and flexibly integrated with an external, national or international hydrogen network or hydrogen grid, to produce green and/or clean ammonia, wherein, when renewable energy is widely available, green hydrogen can be imported from the hydrogen grid to produce ammonia, and wherein, when renewable energy is insufficiently available, blue hydrogen can be produced and exported to the hydrogen network, simultaneously with the production of ammonia.

The hydrogen separation unit as considered herein is fully integrated in the ammonia production plant both at an inlet and at an outlet thereof. In particular, the hydrogen separation unit extracts pure hydrogen from at least part of a hydrogen-containing gas stream, particularly from a hydrogen-rich gas stream, in the ammonia production plant, particularly from slip stream or side stream of a hydrogen-containing or hydrogen-rich gas stream in the purification section and/or the ammonia synthesis section of the ammonia production plant. Suitable means to split a hydrogen-containing gas stream and to obtain a slip stream or side stream from the hydrogen-containing gas stream are known and include e.g. a T-shaped connection having one inlet and two outlets, such that a gas flowing through the inlet of the T-connection is split into two gas streams of identical chemical composition. The separation in the hydrogen separation unit results in an essentially pure hydrogen stream, which can be exported, and a hydrogen-depleted tail gas stream. The tail gas of the hydrogen separation unit comprising some hydrogen and the remaining impurities is sent back to the ammonia production process, particularly to the reforming section and/or to the purification section.

In particular embodiments, the hydrogen separation unit is integrated with the purification section and/or the ammonia synthesis section and the hydrogen separation unit. In particular, the inlet for a hydrogen-containing gas of the hydrogen separation unit, is in fluid communication with one or more of:
- the syngas between the purification section and the ammonia synthesis section, for providing a part of the syngas to the hydrogen separation unit. More in particular, the inlet for a hydrogen-containing gas of the hydrogen separation unit is in fluid communication with the syngas between the purification section and a syngas compressor positioned between the purification section and the ammonia synthesis section; and/or with the syngas between two stages of the syngas compressor positioned between the purification section and the ammonia synthesis section;
- a partially purified hydrogen-containing process gas in the purification section, in particular a partially purified hydrogen-containing process gas downstream of the carbon dioxide removal unit or, stated differently, a partially purified hydrogen-containing process gas between the carbon dioxide removal unit and a further purification unit downstream of the carbon dioxide removal unit, for providing a part of the partially purified hydrogen-containing process gas to the hydrogen separation unit. In certain embodiments, the inlet for a hydrogen-containing gas of the hydrogen separation unit is in fluid communication with a partially purified hydrogen-containing gas between the carbon dioxide removal unit and the methanation unit of the purification section, between the methanation unit and the dryer of the purification section, and/or between the dryer and the cold box unit of the purification section, for providing a part of the partially purified hydrogen-containing process gas to the hydrogen separation unit. In certain embodiments, the inlet for a hydrogen-containing gas of the hydrogen separation unit is in fluid communication with a partially purified hydrogen-containing gas between the carbon dioxide removal unit and a liquid nitrogen wash unit or cold box unit; and/or
- with a hydrogen-containing recycle stream and/or with the hydrogen-containing purge flow in the ammonia synthesis section.

These different options further demonstrate the inherent flexibility of the hybrid ammonia-producing plant according to the present disclosure.

In particular embodiments, the syngas is split into a main syngas stream, which is provided to the ammonia synthesis section, and a syngas slip stream, wherein the syngas slip stream is provided to the hydrogen separation unit. In particular embodiments, the syngas slip stream is less than 40 %, particularly less than 35%, such as between 0 and 35% or between 5% and 30% of the syngas stream leaving the purification section. Stated differently, the inlet of the hydrogen separation unit for a hydrogen-containing gas is in fluid communication with or connected to the syngas between the purification section and the ammonia synthesis section, for providing a part of the syngas to the hydrogen separation unit. More in particular, the inlet of the hydrogen separation unit may be in fluid communication or connected to the syngas between the outlet of the purification unit and the syngas compressor, or may be in fluid communication with or connected between two stages of the syngas compressor, i.e. between a first and a second stage of the syngas compressor. Advantageously, both the hydrogen concentration of the syngas of about 75 vol%, as well as the pressure of the syngas of about 24 barg in the suction of the syngas compressor or a higher pressure between two stages of the syngas compressor are highly suitable conditions for an efficient performance of the hydrogen separation unit, particularly a PSA unit.

Additionally or alternatively, in certain embodiments, the hydrogen separation unit, particularly the inlet of the hydrogen separation unit for a hydrogen-containing gas, is in fluid communication with or connected to a partially purified hydrogen-containing process gas in the purification section. As indicated above, the purification section comprises multiple purification units wherein a partially purified hydrogen-containing process gas is provided between two adjacent purification units. Several configurations of the purification section are known. It is understood that the present disclosure is not limited to a particular configuration of the purification section, as the different configurations of the purification section all comprise a partially purified hydrogen-containing process gas with varying degree of purity.

Stated differently, the partially purified hydrogen-containing process gas between two adjacent purification units is split into a main partially purified hydrogen-containing process gas stream, which is provided to a subsequent unit in the purification section, and a partially purified hydrogen-containing process gas slip stream, wherein the slip stream is provided to the hydrogen separation unit. While the hydrogen concentration of the partially purified hydrogen-gas is about 65-70 vol%, and thus somewhat lower than that of the syngas of about 75 vol%, its pressure is somewhat higher than that of the syngas. This gas stream is still highly suitable for an efficient performance of the hydrogen separation unit, particularly a PSA unit.

In particular embodiments, the purification section comprises a shift conversion unit, a carbon dioxide removal unit downstream of the shift conversion unit, and one or more further purification units downstream of the carbon dioxide removal unit, wherein a partially purified hydrogen-containing process gas is provided to each unit of the purification section downstream of the shift conversion unit. More in particular, the inlet of the hydrogen separation unit is in fluid communication with or connected to a partially purified hydrogen-containing process gas downstream of the carbon dioxide removal unit, particularly to a partially purified hydrogen-containing process gas between the carbon dioxide removal unit and the one or more further purification units downstream of the carbon dioxide removal unit. Stated differently, a partially purified hydrogen-containing process gas downstream of the carbon dioxide removal unit is split into a main partially purified hydrogen-containing process gas stream, which is provided to a subsequent unit in the purification section, and a partially purified hydrogen-containing process gas slip stream, wherein the slip stream is provided to the hydrogen separation unit.

In certain embodiments, the purification section further comprises a methanation unit downstream of the carbon dioxide removal unit, wherein the inlet of the hydrogen separation unit is in fluid communication with or connected to a partially purified hydrogen-containing process gas between the carbon dioxide removal unit and the methanation unit.

In certain embodiments, the purification section further comprises a methanation unit downstream of the carbon dioxide removal unit, a dryer downstream of the methanation unit, and a cold box unit downstream of the dryer, wherein a partially purified hydrogen-containing process gas is provided to each unit of the purification section downstream of the shift conversion unit. More in particular, the inlet of the hydrogen separation unit is in fluid communication with or connected to a partially purified hydrogen-containing process gas between the carbon dioxide removal unit and the methanation unit, between the methanation unit and the dryer, and/or between the dryer and the cold box unit, for providing a part of the partially purified hydrogen-containing process gas to the hydrogen separation unit.

Additionally or alternatively, in certain embodiments, the hydrogen separation unit, in particular the inlet of the hydrogen separation unit for a hydrogen-containing gas, is in fluid communication with or connected to a hydrogen-containing gas in the ammonia synthesis section. As indicated above, the ammonia synthesis section comprises an ammonia converter; an ammonia separation unit downstream of the ammonia converter and generating a hydrogen-containing recycle stream; and an inert gas removal unit generating a hydrogen containing purge flow. More in particular, the inlet of the hydrogen separation unit is in fluid communication with or connected to the hydrogen-containing recycle stream and/or with the hydrogen-containing purge flow of the inert gas removal unit. Stated differently, the hydrogen-containing recycle stream is split into a main hydrogen-containing recycle stream, which is typically provided between 2 stages of the syngas compressor, and a partially purified hydrogen-containing recycle gas slip stream, wherein the slip stream is provided to the hydrogen separation unit, particularly following a treatment in an ammonia removal unit. Optionally, the hydrogen-containing purge gas stream may be split into a main purge gas stream, which is provided as fuel source to the burners of the primary reformer, and a purge gas slip stream which is provided to the hydrogen separation unit. Alternatively, the complete hydrogen-containing purge gas stream is provided to the hydrogen separation unit, particularly a PSA-unit.

In particular embodiments, the inlet of the hydrogen separation unit for a hydrogen-containing gas is in fluid communication with or connected to the syngas between the purification section and the ammonia synthesis section and to the hydrogen-containing purge gas stream from the inert gas removal unit in the ammonia synthesis section. Stated differently, a syngas slip stream is combined with the hydrogen-containing purge gas stream and provided to the hydrogen separation unit. Advantageously, this allows to increase the hydrogen-production without significantly reducing the syngas stream to the ammonia synthesis section. In case a too low flow of syngas is provided to the syngas compressor, e.g. by providing more than 30%, more than 35% or more than 40% of the syngas to the hydrogen separation unit, a recycle valve in the syngas compressor will open to ensure a minimum syngas flow, which is not desired from an economical point of view. In addition, the valuable hydrogen in the purge flow can be recovered instead of being burned in the burners of the reforming section.

In particular embodiments, the second outlet of the hydrogen separation unit for the tail gas is integrated with the reforming section and/or with the purification section. The tail gas still contains about 25 to 35 vol% of hydrogen and can be used as fuel source and/or can be recycled to the purification section. The second outlet of the hydrogen separation unit for the tail gas may be in fluid communication with one or more of:
- the furnace or burners of a reforming unit of the reforming section, particularly wherein the reforming unit, in particular a primary reformer, comprises a furnace or burners which is supplied with a fuel gas, and wherein the tail gas is provided as an additional fuel source to the furnace or burners;
- a compressor gas turbine, for providing the tail gas as fuel to the compressor gas turbine, wherein the compressor gas turbine powers an air compressor which provides air to a reforming unit in the reforming section, particularly to a secondary reformer; and/or
- the purification section, particularly with a partially purified hydrogen containing-gas stream in the purification section, particularly upstream of the cold box, for recycling the tail gas to the purification section.

These different options for using the tail gas further demonstrate the inherent flexibility of the hybrid ammonia-producing plant according to the present disclosure.

In particular embodiments, the second outlet of the hydrogen separation unit for the tail gas is in fluid communication with or connected to the burners of the primary reformer. Advantageously, as the tail gas still contains about 25 to 35 vol% hydrogen and is available at a pressure of 0.3 barg, it can be directly used a fuel source for the burners of the primary reformer.

Additionally or alternatively, in certain embodiments, the second outlet of the hydrogen separation unit for the tail gas is in fluid communication with or connected to a compressor gas turbine of an air compressor, which provides compressed air to the reforming section, particularly to the secondary reformer. More in particular, a tail gas compressor may be provided to compress the tail gas to a pressure suitable for using it as fuel of the compressor gas turbine.

Additionally or alternatively, in certain embodiments, the tail gas from the hydrogen separation unit may be recycled to the purification section. In certain embodiments, the second outlet of the hydrogen separation unit for the tail gas is in fluid communication with or connected to the purification section, in particular upstream of the cold box, such as between the dryer and the cold box, to recycle the tail gas and recover the hydrogen therein. Recovering the hydrogen is often preferred over burning the hydrogen as fuel. However, due to the difference in pressure between the tail gas and the hydrogen-containing process gas stream in the purification section, a tail gas compressor may be provided to compress the tail gas prior to its recycling to the purification section.

The flexibility of the hybrid ammonia-producing plant according to the present disclosure, particularly the smooth operation and transition when varying the different streams provided to and leaving the hydrogen separation unit, is further ensured by providing pressure and flow control systems to the different streams provided to and leaving the hydrogen separation unit. Accordingly, in particular embodiments, the ammonia production plant according to the present disclosure comprises one or more of:
(i) a pressure control system, particularly comprising a pressure controller and a pressure transmitter, in the first outlet or connected to the first outlet of the hydrogen separation unit, for maintaining the pressure in the hydrogen separation unit. In certain embodiments, the pressure setpoint of the pressure controller is automated in function of the actual suction pressure of the syngas compressor. The setpoint of the pressure controller may also be an operator input;
(ii) a pressure control system, particularly comprising a pressure controller and a pressure transmitter, or a flow control system, particularly comprising a flow controller and a flow transmitter, in the second outlet or connected to the second outlet of hydrogen separation unit; for controlling the flow or pressure of the tail gas to the reforming section and/or to the purification section. In particular, the hydrogen separation unit, particularly the PSA-unit, may comprise a buffer volume, such as a mixing drum. As the tail gas generated by the PSA-unit is not a continuous flow, the buffer volume or mixing drum reduces the pressure and flow fluctuations in the tail gas stream, and further homogenizes its composition. In particular embodiments, such as when the tail gas is used as fuel for the primary reformer, a remote flow set point is calculated such that the pressure in the tail gas line remains constant. This remote flow set point thus depends on and varies with the capacity of the hydrogen separation unit, particularly the PSA-unit;
(iii) a flow control system, particularly comprising a flow controller and a flow transmitter, in the inlet or connected to the inlet of the hydrogen separation unit. The feed to the hydrogen separation unit is dependent on the amount of hydrogen that needs to be produced, and the setpoint of the flow control system is thus typically an operator input. In particular embodiments, the flow control system is configured to ensure a minimum flow of the syngas through a syngas compressor positioned between the purification section and the ammonia synthesis section. The minimum flow protection of the syngas compressor may thus provide a signal to the flow control system which serves as the maximum limit for the flow, particularly a flow originating from the purification section, that can be treated by the hydrogen separation unit; and/or
(iv) one or more pressure-controlled vent lines on the inlet of the hydrogen separation unit, on the first outlet of hydrogen separation unit and on the second outlet of the hydrogen separation unit. In particular, the vent lines are normally closed when the hydrogen separation unit is in normal operation. Only in case of upsets of the pressure will the vent lines open to reduce the pressure and flow fluctuations in the different gas streams in the ammonia production plant, particularly to avoid pressure and flow fluctuations in the syngas stream, produced in the purification section, and in the fuel gas streams, provided to the burners of the primary reformer. The vent lines also ensure a smooth transition when changing the capacity of the hydrogen separation unit, such as during start-up and shut-down of the hydrogen separation unit, without interrupting the ammonia production. For instance, when minimizing or even stopping the hydrogen export, for example in daytime or under windy conditions, the feed flow to the hydrogen separation unit is gradually reduced to its minimum, and subsequently the first outlet for hydrogen is closed. The hydrogen separation unit may continue operation without hydrogen export, but the tail gas can be maintained as fuel source for the burners of the primary reformer. This is called the internal recycle mode of the PSA unit. When hydrogen export is required again, for example at nighttime or in low wind conditions, the first outlet for hydrogen may be gradually opened and the capacity of the hydrogen separation unit is gradually increased as well. Rather than keeping the PSA unit in internal recycle mode when hydrogen export is not needed anymore, it is also possible to normally stop the PSA unit. The PSA unit can then normally be restarted when hydrogen export is required again. Stopping and starting the PSA unit will require more time compared to leaving the PSA unit operating in the internal recycle mode.

A second, related aspect of the present disclosure generally provides a method for revamping an (existing) ammonia production plant or system, wherein the (existing) ammonia production plant comprises a reforming section; a purification section, downstream of the reforming section; and an ammonia synthesis section, downstream of the purification section; and wherein the method further comprising installing a hydrogen separation unit, wherein the hydrogen separation unit is configured for the selective separation of hydrogen from a hydrogen-containing or hydrogen-rich gas stream in the ammonia production process, thereby obtaining a hydrogen stream, particularly an (essentially) pure hydrogen gas stream, and a tail gas stream having a reduced hydrogen concentration compared to the hydrogen-containing or hydrogen-rich gas stream provided to the hydrogen separation unit, particularly wherein the tail gas is recycled or re-used, particularly as a fuel source, in the ammonia production plant. More in particular, the hydrogen separation unit is installed in the ammonia production plant, with the inlet for a hydrogen-containing gas in fluid communication with or connected to a hydrogen-containing gas stream in the purification section, with a hydrogen-containing gas stream in the ammonia synthesis section of the ammonia producing plant, and/or with a hydrogen-containing gas stream between the purification section and the ammonia synthesis section, and with the second outlet for a tail gas stream in fluid communication with or connected to the reforming section and/or with the purification section of the ammonia production plant. It is understood that said method for revamping an existing ammonia production plant or system results in an ammonia production plant or system according to the present disclosure, as described above.

As stated above ammonia-producing plants and systems, comprising a reforming section, a purification section and ammonia synthesis section, are well-known to the skilled person, and have been described above. In the reforming section, also referred to as a steam reforming section, a feed gas or process gas comprising hydrocarbons, such as a natural gas, is catalytically reacted with water (steam) and converted into a hydrogen-containing process gas, particularly comprising hydrogen and CO. The reforming section comprises one or more reforming units, such as a pre-reformer, a primary and secondary reformer, or an autothermal reformer. The primary reformer typically comprises a furnace or multiple burners, provided with a fuel gas, e.g. natural gas, and a reactor, provided with a feed of a gaseous hydrocarbon, e.g. natural gas. In the secondary reformer, (compressed) air is introduced, to reduce the content of hydrocarbon, particular methane, in the process gas. The purification section comprises multiple purification units, for gradually purifying and converting the hydrogen-containing process gas, which leaves the reformer section and mainly comprises H₂, CO, CO₂, N₂ and CH₄, into syngas. Several configurations of the purification section are known. In particular, the purification section comprises a shift conversion section, particularly comprising a high-temperature shift reactor and a low-temperature shift reactor, a CO₂ removal unit, for the removal of the carbon dioxide from the hydrogen-containing process gas generated in the shift conversion section; and one or more further purification units, for removing further impurities, in particular by separating non-hydrogen and hydrogen gas, such as by a liquid nitrogen wash, and/or by converting oxides harmful to the ammonia converter into non-oxides, such as in a methanation unit.

The hydrogen-rich syngas exiting the purification section is compressed in a syngas compressor and provided to the ammonia synthesis section, comprising an ammonia converter, an ammonia separator unit, for separating ammonia from the unreacted syngas, and an inert gas removal unit, to avoid accumulation of inert gaseous compounds in the ammonia synthesis section.

The hydrogen separation unit may comprise a hydrogen separation membrane, as known by the skilled person, or the hydrogen separation unit may comprise a pressure swing adsorption unit or PSA-unit, i.e. a pressure swing adsorption-based (PSA-based) hydrogen separation unit comprising a solid adsorbent media. The hydrogen separation unit can also be a combination of a hydrogen separation membrane and a PSA unit. In particular embodiments, the hydrogen separation unit is a PSA-unit, as it is well suited to the conditions, particular pressure and hydrogen concentration, of the hydrogen-containing gas stream in the front end of an ammonia production plant and to the conditions in a hydrogen network or hydrogen grid. In particular embodiments, the hydrogen separation unit, particularly the PSA unit comprises a buffer volume, such as a mixing drum, for reducing and avoiding flow and pressure fluctuations in the tail gas stream, and for homogenizing the composition of the tail gas.

In particular embodiments, the revamping method further comprises connecting the first outlet for the pure hydrogen stream to a hydrogen network, for exporting the hydrogen, purified by the hydrogen separation unit to the hydrogen network, particularly to an external, national or international hydrogen grid. This contributes to balancing a hydrogen network or hydrogen grid. In particular embodiments, the ammonia production plant further comprises a system or technology for carbon capture and storage. Advantageously, by combining the carbon dioxide removal unit with carbon capture and storage systems and technology, the generation of hydrogen in the revamped ammonia-production plant according to the present disclosure result in significantly reduced carbon emissions, and blue hydrogen can be provided to the hydrogen network or hydrogen grid.

In certain embodiments, the revamping method according to the present disclosure further comprises the step of installing or connecting the purification section to a source of a second hydrogen gas, particularly a source of a green hydrogen gas, such as an electrolysis unit or a hydrogen network. In particular embodiments, the revamping method according to the present disclosure may further comprise the step of configuring the ammonia plant to import hydrogen, particularly green hydrogen, and comprises connecting the purification section to a hydrogen network, such as an external, national or international hydrogen grid. In particular, the revamping method comprises connecting the purification section to a hydrogen network upstream of the high/low temperature shift convertor, upstream of the CO₂ removal unit, upstream of the methanation unit, upstream of the dryer or upstream of the cold box, depending on the quality of the imported hydrogen and depending on the configuration of the purification section. Advantageously, this allows the use of (green) hydrogen from the hydrogen network, particularly when renewable energy is widely available, and less fossil-based sources are needed in the production of ammonia. When renewable energy is insufficiently available, blue hydrogen can be produced and exported to the hydrogen network, simultaneously with the production of ammonia.

In particular, the installation of the hydrogen separation unit as considered herein is performed in such a way that the hydrogen separation unit is fully integrated in the ammonia production plant both at an inlet and at an outlet thereof. In particular, the hydrogen separation unit extracts pure hydrogen from at least part of a hydrogen-containing gas stream, particularly from a hydrogen-rich gas stream, in the ammonia production plant, particularly from slip stream or side stream of a hydrogen-containing or hydrogen-rich gas stream in the purification section, in the ammonia section of the ammonia production plant, and/or between the purification section and the ammonia synthesis section. Installation of the hydrogen separation unit thus comprises the installation of suitable splitting means in the purification section, the ammonia synthesis section and/or between the purification section and the ammonia section. Splitting means to split a hydrogen-containing gas stream and to obtain a slip stream or side stream from the hydrogen-containing gas stream are known and include e.g. a T-shaped connection having one inlet and two outlets, such that a gas flowing through the inlet of the T-connection is split into two gas streams of identical chemical composition.

In particular embodiments of the revamping method according to the present disclosure, the hydrogen separation unit is integrated with the purification section and/or the ammonia synthesis section, wherein:
- a slip stream of the syngas between the purification section and the ammonia synthesis section is provided to the inlet of the hydrogen separation unit, more in particular wherein a slip stream of the syngas between the purification section and the syngas compressor and/or a slip stream of the syngas between a first stage and a second stage of the syngas compressor is provided to the inlet of the hydrogen separation unit; and/or
- a slip stream of a partially purified hydrogen-containing process gas in the purification section is provided to the inlet of the hydrogen separation unit, more in particular a slip stream of a partially purified hydrogen-containing process gas downstream of the carbon dioxide removal unit, particularly between the carbon dioxide removal unit and a further purification unit of the purification section, such as between the carbon dioxide removal unit and a methanation unit. In certain embodiments, a slip stream of a partially purified hydrogen-containing process gas downstream of the methanation unit, such as between the methanation unit and the dryer of the purification section and/or between the dryer and the cold box unit of the purification section, is provided to the inlet of the hydrogen separation unit, for providing a part of the partially purified hydrogen-containing process gas to the hydrogen separation unit. In certain embodiments, a slip stream of a partially purified hydrogen-containing process gas between the carbon dioxide removal unit and the methanation unit of the purification section, between the methanation unit and the dryer of the purification section, and/or between the dryer and the cold box unit of the purification section is provided to the inlet of the hydrogen separation unit; and/or
- at least part of a hydrogen-containing recycle stream and/or a hydrogen-containing purge flow in the ammonia synthesis section is provided to the inlet of the hydrogen separation unit.

In particular embodiments, a splitting means is installed in a line transporting the syngas, in particular between the outlet of the purification section and the syngas compressor, thereby obtaining a main syngas stream, which is provided to the ammonia synthesis section, and a syngas slip stream, which is provided to the hydrogen separation unit. Stated differently, the inlet of the hydrogen separation unit for a hydrogen-containing gas is installed in fluid communication with or connected to the syngas between the purification section and the ammonia synthesis section, for providing a part of the syngas to the hydrogen separation unit. In certain embodiments, the inlet of the hydrogen separation unit may be installed and connected to the syngas compressor, particularly between two stages of the syngas compressor. A splitting means may be installed between two stages of the syngas compressor for providing a slip stream of the partially compressed syngas stream to the hydrogen separation unit.

Additionally or alternatively, in certain embodiments, a splitting means is installed in a line transporting a partially purified hydrogen-containing gas in the purification section, in particular downstream of the carbon dioxide removal unit or between the carbon dioxide removal unit and a further purification unit of the purification section, thereby obtaining a main partially purified hydrogen-containing gas stream, which is treated in the purification section, and a partially purified hydrogen-containing gas slip stream, which is provided to the hydrogen separation unit. In certain embodiments, a splitting means is installed in a line transporting a partially purified hydrogen-containing gas in the purification section between the carbon dioxide removal unit and the methanation unit, between the methanation unit and the dryer, and/or between the dryer and the cold box unit, thereby obtaining a main partially purified hydrogen-containing gas stream, which is treated in the purification section, and a partially purified hydrogen-containing gas slip stream, which is provided to the hydrogen separation unit. Stated differently, the inlet of the hydrogen separation unit for a hydrogen-containing gas is installed in fluid communication with or connected to a partially purified hydrogen-containing process gas in the purification section. More in particular, the inlet of the hydrogen separation unit is installed in fluid communication with or connected to a partially purified hydrogen-containing process gas downstream of the carbon dioxide removal unit, such as between the carbon dioxide removal unit and the methanation unit, between the methanation unit and the dryer, and/or between the dryer and the cold box unit.

Additionally or alternatively, in certain embodiments, the hydrogen separation unit, in particular the inlet of the hydrogen separation unit for a hydrogen-containing gas, is installed in fluid communication with or connected to a hydrogen-containing gas in the ammonia synthesis section. More in particular, the inlet of the hydrogen separation unit is installed in fluid communication with or connected to the hydrogen-containing recycle stream and/or with the hydrogen-containing purge flow of the inert gas removal unit. Stated differently, a splitting means is installed in a line transporting the hydrogen-containing recycle stream, thereby obtaining a main hydrogen-containing recycle stream, which is provided between 2 stages of the syngas compressor, and a partially purified hydrogen-containing recycle gas slip stream, which is provided to the hydrogen separation unit, particularly following a treatment in an ammonia removal unit. A splitting means may also be installed in the hydrogen containing purge flow for providing a slipstream of this stream to the hydrogen separation unit.

In particular embodiments, the inlet of the hydrogen separation unit for a hydrogen-containing gas is installed in fluid communication with or connected to the syngas between the purification section and the ammonia synthesis section and to the hydrogen-containing purge gas stream from the inert gas removal unit in the ammonia synthesis section. Stated differently, a splitting means is installed in a line transporting the syngas, in particular between the outlet of the purification and the syngas compressor, or between two stages of the syngas compressor, thereby obtaining a main syngas stream, which is provided to the ammonia synthesis section, and a syngas slip stream, which is combined with the hydrogen-containing purge gas stream and provided to the hydrogen separation unit. Advantageously, this allows to increase the hydrogen-production without significantly reducing the syngas stream to the ammonia synthesis section.

In particular embodiments, the second outlet of the hydrogen separation unit for the tail gas is installed and integrated with the reforming section and/or with the purification section. The tail gas still contains about 25 to 35 vol% of hydrogen and can be used as fuel source and/or can be recycled to the purification section. The second outlet of the hydrogen separation unit for the tail gas may be installed in fluid communication with:
- the furnace or burners of a reforming unit of the reforming section, in particular the primary reformer, wherein the tail gas is provided as an additional fuel source to the furnace or burners;
- a compressor gas turbine of an air compressor in the reforming section, for providing the tail gas as fuel to the compressor gas turbine; and/or
- the purification section, for recycling the tail gas to the purification section to recover the hydrogen.

In particular embodiments, the second outlet of the hydrogen separation unit for the tail gas is installed in fluid communication with or connected to the burners of the primary reformer. Advantageously, as the tail gas still contains about 25 to 35 vol% hydrogen and is available at a pressure of 0.3 barg, it can be directly used a fuel source for the burners of the primary reformer.

Additionally or alternatively, in certain embodiments, the second outlet of the hydrogen separation unit for the tail gas is installed in fluid communication with or connected to a compressor gas turbine of an air compressor, which provides compressed air to the reforming section, particularly to the secondary reformer, wherein the tail gas is provided as a fuel to the compressor gas turbine. More in particular, a tail gas compressor may be provided and installed to compress the tail gas to a pressure suitable for using it as fuel of the compressor gas turbine.

Additionally or alternatively, in certain embodiments, the tail gas from the hydrogen separation unit may be connected to the purification section, to recycle the tail gas and recover the hydrogen therein. In certain embodiments, the second outlet of the hydrogen separation unit for the tail gas is installed in fluid communication with or connected to the purification section, in particular upstream of the cold box, such as between the dryer and the cold box, to recycle the tail gas and recover the hydrogen therein. However, due to the difference in pressure between the tail gas and the hydrogen-containing process gas stream in the purification section, a tail gas compressor may be installed to compress the tail gas prior to its recycling to the purification section.

In particular embodiments, the revamping method further comprises the step of installing pressure and flow control systems to the different streams provided to and leaving the hydrogen separation unit. Accordingly, in certain embodiments, the revamping method according to the present disclosure further comprises the step of installing one or more of:
(i) a pressure control system, particularly comprising a pressure controller and a pressure transmitter, in the first outlet or connected to the first outlet of the hydrogen separation unit, for maintaining the pressure in the hydrogen separation unit;
(ii) a pressure control system, particularly comprising a pressure controller and a pressure transmitter, or a flow control system, particularly comprising a flow controller and a flow transmitter, in the second outlet or connected to the second outlet of hydrogen separation unit; for controlling the flow or pressure of the tail gas to the reforming section and/or to the purification section;
(iii) a flow control system, particularly comprising a flow controller and a flow transmitter, in the inlet or connected to the inlet of the hydrogen separation unit. and/or
(iv) one or more pressure-controlled vent lines on the inlet of the hydrogen separation unit, on the first outlet of hydrogen separation unit and/or on the second outlet of the hydrogen separation unit. The vent lines are normally closed when the hydrogen separation unit is in normal operation. Only in case of upsets in the pressure will the vent lines open for reducing pressure and flow fluctuations in the syngas stream, produced in the purification section, and in the fuel gas streams, provided to the burners of the primary reformer, and for ensuring a smooth transition when changing the capacity of the hydrogen separation unit, such as during start-up and shut-down of the hydrogen separation unit, without interrupting the ammonia production.

A further, related aspect of the present disclosure generally provides a method for the combined production of ammonia and hydrogen, comprising the steps of producing ammonia from a hydrocarbon gas in an ammonia production plant or system, comprising a reforming section, a purification section and an ammonia synthesis section, and producing a pure hydrogen gas in a hydrogen separation unit from a hydrogen-containing gas generated in the ammonia production plant or system. It is understood that the combined production of ammonia and hydrogen refers to ammonia and hydrogen as end products of the method, which may be exported and/or used in a system or plant different from the ammonia production plant or system according to the present disclosure.

More in particular, the method for the combined production of ammonia and hydrogen comprises the steps of
(a) converting a hydrocarbon gas into a hydrogen-containing process gas in a reforming section of an ammonia production plant, and/or, optionally, importing a second hydrogen gas from a hydrogen network to a purification section of an ammonia production plant;
(b) gradually purifying the hydrogen-containing process gas and converting it into a syngas in a purification section of an ammonia production plant;
(c) converting the syngas into ammonia in an ammonia synthesis section of an ammonia production plant, thereby obtaining ammonia as an end-product;
characterized in that the method further comprises the step of:
(d) providing a hydrogen-containing gas from the purification section, a hydrogen-containing gas from the ammonia synthesis section, and/or a hydrogen-containing gas from between the purification section and the ammonia synthesis section to a hydrogen separation unit, thereby obtaining a pure hydrogen gas as an end-product, and a tail gas, particularly wherein the tail gas is provided to the reforming section and/or the purification section.

As described elsewhere herein, ammonia-producing plants and systems, comprising a reforming section, a purification section and ammonia synthesis section, are well-known to the skilled person. In particular embodiments, the method for the combined production of ammonia and hydrogen is performed in an ammonia production plant according to the present disclosure, as described elsewhere herein.

The hydrogen separation unit may comprise a hydrogen separation membrane, as known by the skilled person, or the hydrogen separation unit may comprise a pressure swing adsorption unit or PSA-unit, i.e. a pressure swing adsorption-based (PSA-based) hydrogen separation unit comprising solid adsorbent media. The hydrogen separation unit can also be a combination of a hydrogen separation membrane and a PSA unit. In particular embodiments, the hydrogen separation unit is a PSA-unit. In particular embodiments, the hydrogen separation unit, particularly the PSA unit comprises a buffer volume, such as a mixing drum, for reducing and avoiding flow and pressure fluctuations in the tail gas stream, and for homogenizing the composition of the tail gas.

In particular embodiments of the method for the combined production of ammonia and hydrogen, step (d) comprises providing a slip stream of the syngas between the purification section and the ammonia synthesis section to the hydrogen separation unit. In certain embodiments step (d) comprises providing, to the hydrogen separation unit, a slip stream of the syngas between the purification section and the syngas compressor and/or a slip stream from the syngas compressor, particularly a slip stream of the syngas between two stages of the syngas compressor. In particular embodiments, the slip stream of the syngas is less than 40 %, particularly less than 35 %, such as between 0 and 35 , or between 5 % and 30 % of the nominal plant capacity of the syngas stream leaving the purification section. Both the hydrogen concentration of the syngas of about 75 vol%, as well as the pressure of the syngas of about 24 barg are highly suitable conditions for an efficient performance of the hydrogen separation unit, particularly a PSA unit.

Additionally or alternatively, in certain embodiments, step (d) of the method for the combined production of ammonia and hydrogen comprises providing a slip stream of a partially purified hydrogen-containing process gas in the purification section to the hydrogen separation unit. More in particular, step (d) of the method for the combined production of ammonia and hydrogen comprises providing a slip stream of a partially purified hydrogen-containing process gas downstream of the carbon dioxide removal unit, particularly between the carbon dioxide removal unit and a further downstream purification unit of the purification section, such as between the carbon dioxide removal unit and a methanation unit.

In certain embodiments, step (d) comprises providing a slip stream of a partially purified hydrogen-containing process gas downstream of the methanation unit, such as between the methanation unit and the dryer of the purification section and/or between the dryer and the cold box unit of the purification section, to the hydrogen separation unit. In certain embodiments, step (d) of the method for the combined production of ammonia and hydrogen comprises providing a slip stream of a partially purified hydrogen-containing process gas between the carbon dioxide removal unit and the methanation unit, between the methanation unit and the dryer, and/or between the dryer and the cold box unit to the hydrogen separation unit.

In particular embodiments, the slip stream of the partially purified hydrogen-containing process gas is less than 40 %, particularly less than 35 %, such as between 0 and 35 %, or between 5 % and 30 % of the nominal plant capacity of the partially purified hydrogen-containing process gas stream in the purification section. Both the hydrogen concentration of the hydrogen-containing gas of about 65-70 vol%, as well as the pressure of the syngas of above 24 barg are highly suitable conditions for an efficient performance of the hydrogen separation unit, particularly a PSA unit.

Additionally or alternatively, in certain embodiments, step (d) of the method for the combined production of ammonia and hydrogen comprises providing at least part of a hydrogen-containing recycle stream and/or a hydrogen-containing purge flow in the ammonia synthesis section to the hydrogen separation unit. In particular, the hydrogen-containing recycle stream may first be treated in an ammonia removal unit before providing it to the hydrogen separation unit.

In particular embodiments, step (d) of the method for the combined production of ammonia and hydrogen comprises combining a slip stream of the syngas between the purification section and the ammonia synthesis section, such as between the cold box unit and the syngas compressor or from the syngas compressor, and the hydrogen-containing purge flow from the ammonia synthesis section, and providing the combined hydrogen-containing gas stream to the hydrogen separation unit. Advantageously, this allows to increase the hydrogen-production without significantly reducing the syngas stream to the ammonia synthesis section.

As already mentioned, the tail gas still contains about 25 to 35 vol% of hydrogen and can be used as fuel source and/or can be recycled to the purification section. In particular embodiments of the method for the combined production of ammonia and hydrogen, step (d) comprises providing the tail gas of the hydrogen separation unit as fuel to a furnace of a reforming unit in the reforming section. As the tail gas still contains about 25 to 35 vol% hydrogen and is available at a pressure of 0.3 barg, it can be directly used a fuel source for the burners of the primary reformer.

Additionally or alternatively, in certain embodiments, step (d) of the method for the combined production of ammonia and hydrogen comprises providing the tail gas of the hydrogen separation unit as fuel to a compressor gas turbine of an air compressor in the reforming section, wherein the air compressor provides air to a reforming unit, particularly to a secondary reformer. In particular, the tail gas may first be compressed to a pressure of about for example 6 to 40 barg in a tail gas compressor prior to providing the tail gas as fuel to the compressor gas turbine.

Additionally or alternatively, in certain embodiments, step (d) of the method for the combined production of ammonia and hydrogen comprises providing the tail gas of the hydrogen separation unit to the purification section, particularly upstream of the cold box, such as between the dryer and the cold box, or downstream of the carbon dioxide removal unit or downstream of the methanation unit. In particular, the tail gas may first be compressed in a tail gas compressor, such as to a pressure of about 25 to 30 barg, prior to recycling the tail gas to the purification section.

In particular embodiments, in step (d) of the method for the combined production of ammonia and hydrogen, the hydrogen concentration in the hydrogen-containing gas provided to the hydrogen separation unit is at least 50 vol%, such as between 50 vol% and 80 vol%, particularly between 60 vol% and 80 vol% or between 65 vol% and 75 vol%. In certain embodiments, the pressure of the hydrogen-containing gas provided to the hydrogen separation unit ranges between 10 barg and 50 barg, such as between 15 barg and 40 barg, or between 20 barg and 30 barg.

In particular embodiments, the method for the combined production of ammonia and hydrogen further comprises the step of controlling the flow of the hydrogen-containing gas stream to the hydrogen separation unit, the pressure of the pure hydrogen gas stream generated by the hydrogen separation unit and the pressure or flow of the tail gas stream generated by the hydrogen separation unit, with pressure and/or flow control systems and/or pressure controlled vent lines in or connected to the inlet, the first outlet and/or the second outlet of the hydrogen separation unit.

Controlling the pressure of the first hydrogen gas allows for maintaining the pressure in the hydrogen separation unit. The pressure setpoint of the pressure controller may be an operator input, or may be automated in function of the actual suction pressure of the syngas compressor.

Controlling the flow or pressure of the tail gas flow allows to reduce the pressure or flow fluctuations in the tail gas stream, and further homogenizes its composition, particularly as the tail gas generated by the hydrogen separation unit, in particular the PSA-unit is not a continuous flow. In particular embodiments, such as when the tail gas is used as fuel for the primary reformer, a remote flow set point is calculated such that the pressure in the tail gas line remains constant. This remote flow set point thus depends on and varies with the capacity of the hydrogen separation unit, particularly the PSA-unit;

Controlling the flow of the hydrogen-containing gas stream provided to the hydrogen separation unit directly impacts the amount of hydrogen generated by the hydrogen separation unit. The setpoint of the flow control system is thus typically an operator input, dependent on the amount of hydrogen that needs to be produced. In particular embodiments, the flow control system is configured to ensure a minimum flow of the syngas through a syngas compressor positioned between the purification section and the ammonia synthesis section. The minimum flow protection of the syngas compressor may thus provide a signal to the flow control system which serves as the maximum limit for the flow, particularly a flow originating from the purification section, that can be treated by the hydrogen separation unit.

Controlling the pressure in the different streams entering and exiting the hydrogen separation unit, particularly by one or more vent lines on the inlet of the hydrogen separation unit, on the first outlet of hydrogen separation unit and/or on the second outlet of the hydrogen separation unit, reduces the pressure and flow fluctuations in the different gas streams in the ammonia production plant, particularly to avoid pressure and flow fluctuations in the syngas stream, produced in the purification section, and in the fuel gas streams, provided to the burners of the primary reformer; and further ensure a smooth transition when changing the capacity of the hydrogen separation unit, such as during start-up and shut-down of the hydrogen separation unit, without interrupting the ammonia production.

### Exemplary embodiment 1

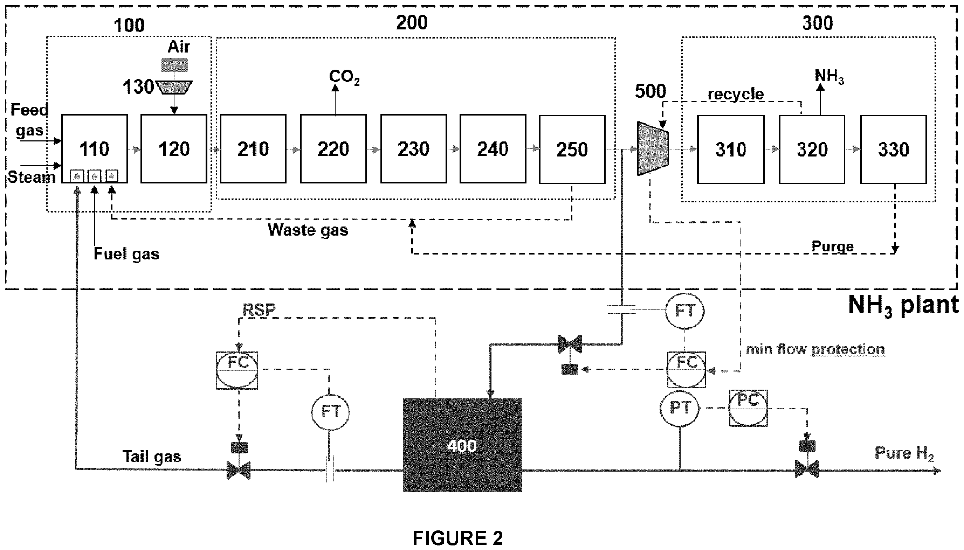

The ammonia-producing plant shown in Figure 2 comprises a reforming section (100), a purification section (200) and an ammonia synthesis section (300). The reforming section comprises a primary reformer (110) and a secondary reformer (120). The primary reformer is fed by a hydrocarbon feed gas, also referred to as a process gas, in particular natural gas, and steam. The burners of the primary reformer (110) are fed with a fuel gas, such as natural gas. The hydrogen-containing gas leaving the primary reformer is further treated in the secondary reformer, which is further fed with air compressed by a compressor (130). The hydrogen-rich gas leaving the reforming section is further treated in the purification section, which comprises a shift conversion unit (210), in particular a high- and low-temperature shift conversion unit, a carbon dioxide removal unit (220), a methanation unit (230), a dryer (240) and a cold box (250). The hydrogen-rich stream leaving the purification section, in particular leaving the cold box therein, is referred to as the syngas. It essentially consists of hydrogen and nitrogen in a 3:1 ratio, and thus comprises about 75 vol% hydrogen. Its pressure is about 24 barg. A waste gas stream leaving the cold box is used as a fuel source for the burners of the primary reformer. The purification section may further comprise an inlet for hydrogen gas (not shown), particularly linked to a hydrogen network, to allow the plant to use green hydrogen supplied by the hydrogen network, for instance, when there is a surplus of renewable energy.

Following compression in syngas compressor 500, the syngas is converted into ammonia in an ammonia converter (310). Ammonia is separated from the unreacted syngas in an ammonia separation unit (320), wherein the unreacted syngas is recycled to the syngas compressor. In the inert gas removal unit (330) part of the reacted syngas is treated to avoid accumulation of inert gaseous compounds, with the purge stream comprising the inert gaseous compounds being used as fuel for the burners of the primary reformer.

The plant shown in Figure 2 further comprises a hydrogen separation unit (400), in particular a PSA unit (pressure swing adsorption unit). The feed to the hydrogen separation unit (400) is a slipstream of the syngas exiting the purification section, or stated differently, between the purification section and the ammonia synthesis section. The pressure and hydrogen concentration of the syngas are good conditions for the operation of the PSA unit. The feed to this hydrogen separation unit is flow controlled based on how much pure hydrogen should be produced. The setpoint to the flow controller (FC) may be an operator input. The hydrogen recovery of the hydrogen separation unit (400), particularly the PSA-unit, is about 84.5%.

In most circumstances, the maximum flow that can go to the hydrogen separation unit (400) is about 30% of the syngas flow production at the standard operating capacity of the ammonia plant. If a higher fraction of the syngas is sent to the hydrogen separation unit (400), then the minimum flow protection of the syngas compressor (500) will activate and compressed syngas will be recycled back to the lower pressure stages of the syngas compressor.

In the pure hydrogen outlet of the hydrogen separation unit, a pressure controller (PC) is installed. This pressure controller will maintain the required pressure inside the hydrogen separation unit (400). The pressure setpoint of the pressure controller in the pure hydrogen outlet of the hydrogen separation unit can be an operator input but can also be automated in function of the actual suction pressure of the syngas compressor (400). The hydrogen outlet may also comprise a compressor (not shown) to have the pressure of the produced hydrogen match that of the hydrogen network.

The tail gas is available at a pressure of 0.3 barg and can be re-used directly as fuel for the primary reformer. The hydrogen concentration in the tail gas is typically 32 vol% for an ammonia plant. In addition, a flow controller is installed in the tail gas coming from the hydrogen separation unit (400). The tail gas from the PSA unit is not a continuous flow but is generated through a batch process. Therefore, a mixing drum (not shown) is present in the tail gas section as part of the PSA unit. The mixing drum acts as a buffer volume. It reduces the pressure and flow fluctuations in the tail gas and homogenizes the gas mixture. A Remote flow setpoint (RSP) that is calculated in the PSA logic is sent to the flow controller in the tail gas of the PSA unit. This flow setpoint is calculated so that the pressure in the tail gas line remains constant, and changes when the capacity to the PSA unit is changing, thus also playing a role in the furnace control of the primary reformer as the tail gas is used as fuel for the primary reformer.

### Exemplary embodiment 2

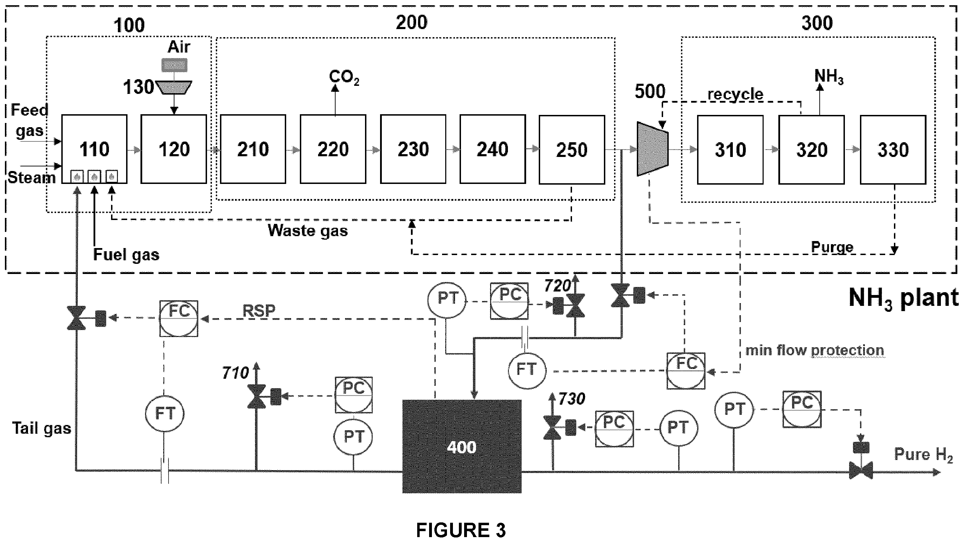

The ammonia-producing plant shown in Figure 3 corresponds to the plant of exemplary embodiment 1, and further comprises vent lines (710, 720, 730) on the incoming stream and the two outcoming streams of the hydrogen separation unit (400). The main purpose of these vent lines is to reduce the flow/pressure fluctuations in the syngas that is produced in the purification section and to reduce the flow/pressure fluctuations in the burners of the primary reformer, particularly ensuring a smooth start or stop of the hydrogen separation unit or during plant upsets in normal operation.

For instance, in case the hydrogen export has to be stopped (for example, in daytime), the feed flow to the PSA unit can be gradually reduced to its minimum and, in addition, the hydrogen outlet of the PSA unit can be closed. The PSA unit operates then in internal recycle mode. The PSA then keeps cycling without hydrogen export, but the tail gas can be maintained as fuel source for the burners of the reformer. When hydrogen export is required again (for example, during nighttime), the hydrogen outlet of the PSA unit can then gradually be opened, and the capacity of the PSA unit can be gradually increased. This will ensure a smooth transition for stopping or starting the hydrogen export without interrupting the ammonia production. Rather than keeping the PSA unit in internal recycle mode when hydrogen export is not needed anymore, it is also possible to normally stop the PSA unit. The PSA unit can then normally be restarted when hydrogen export is required again. Stopping and starting the PSA unit will require more time compared to leaving the PSA unit operating in the internal recycle mode.

### Exemplary embodiment 3

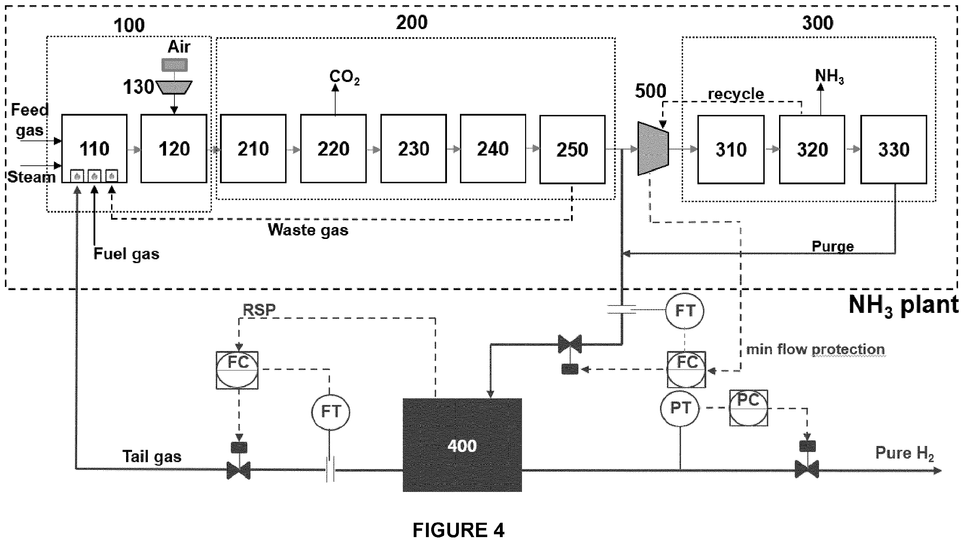

The ammonia-producing plant shown in Figure 4 corresponds to the plant of exemplary embodiment 1 and 2, and further comprises providing both a slipstream of the syngas as the purge flow of the inert gas removal unit (330) to the hydrogen separation unit (400), particularly to boost the hydrogen production when simultaneous ammonia and hydrogen production and export is desired.

As stated in exemplary embodiment 1, a maximal slip stream (particularly from an economical point of view) that can be taken from the syngas and provided to the hydrogen separation unit is around 30% of the total syngas production in the front end of an ammonia plant. Technically it is perfectly possible to send a higher fraction of the syngas to the hydrogen separation unit (400), but this is not economical since the recycle (=minimum flow) valve of the syngas compressor (500) will open. A signal coming from the minimum flow protection logic of the syngas compressor is to be provided to the flow controller that is controlling the slip stream from the syngas that is going to the hydrogen separation unit. The signal coming from the minimum flow protection of the compressor can then serve as a maximum limit for the flow that can be treated in the hydrogen separation unit.

The present exemplary embodiment shows a way to increase the hydrogen production when the plant produces and exports simultaneously ammonia and hydrogen.

As mentioned in exemplary embodiment 1, the synthesis section comprises an inert gas removal unit (330). Due to the addition of air in the ammonia production process, there is accumulation of argon and helium in the ammonia synthesis section. To avoid this accumulation, typically, a small slipstream from the synthesis section is purged. This purge flow also comprises hydrogen, nitrogen and ammonia. In the inert gas removal unit, the ammonia is recovered and send back to the ammonia production process. In the plant of exemplary embodiment 1, the remaining components such as mainly hydrogen, nitrogen and argon are mixed together with the waste gas from the purification section and send back as fuel to the burners of the primary reformer. The hydrogen contained in the stream coming from the inert gas removal unit, indicated as Purge in the figures, may be recovered as well. Accordingly, in the plant according to exemplary embodiment 3, the hydrogen-containing stream from the inert gas removal unit can be added to the slipstream of the syngas and sent to the hydrogen separation unit.

### Exemplary embodiment 4

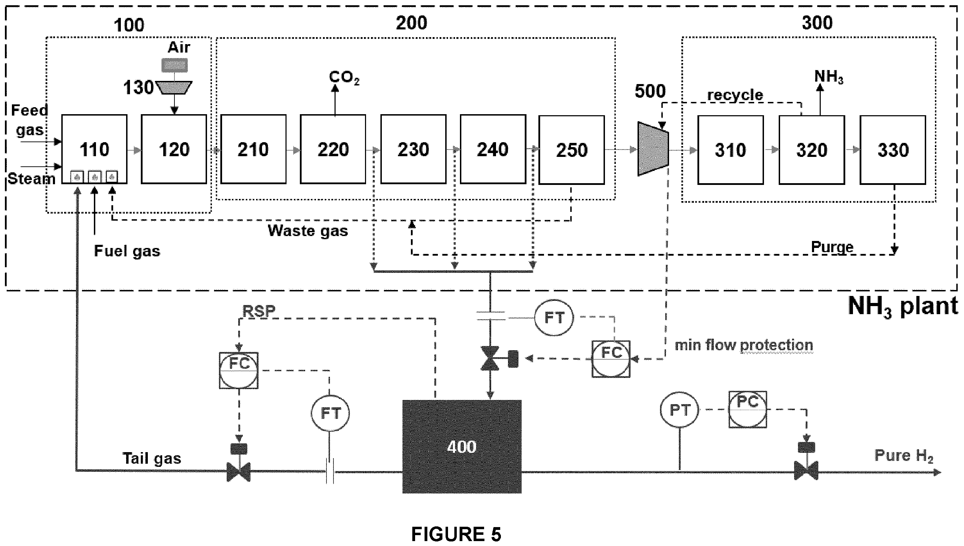

The ammonia-producing plant shown in Figure 5 corresponds to the plant of exemplary embodiment 1, but showing three different options for providing a slipstream from the purification section to the hydrogen separation unit (400) compared to exemplary embodiment 1.

A first option corresponds to taking a slipstream from the purification section upstream of the methanation unit. The hydrogen concentration of the hydrogen-containing process gas upstream of the methanation unit is about 67 vol% (versus 75 vol% in the syngas). The pressure is a few bar higher compared to the syngas, and the hydrogen recovery in the hydrogen separation unit will be somewhat lower than when using syngas.

A second option corresponds to taking a slipstream from the purification section upstream of the dryer. Generally, the same considerations as when using a hydrogen-containing process gas upstream of the methanation unit are applicable.

A third option corresponds to taking a slipstream from the purification section upstream of the cold box. The hydrogen concentration of the hydrogen-containing process gas upstream of the cold box unit is about 67 vol%, and the pressure is about 2 bar higher compared to the syngas. The hydrogen recovery in the hydrogen separation unit will be somewhat lower than when using syngas. This option can also be interesting when only hydrogen is produced without simultaneous production of NH₃. Only the front end of an ammonia plant is then in operation.

### Exemplary embodiment 5

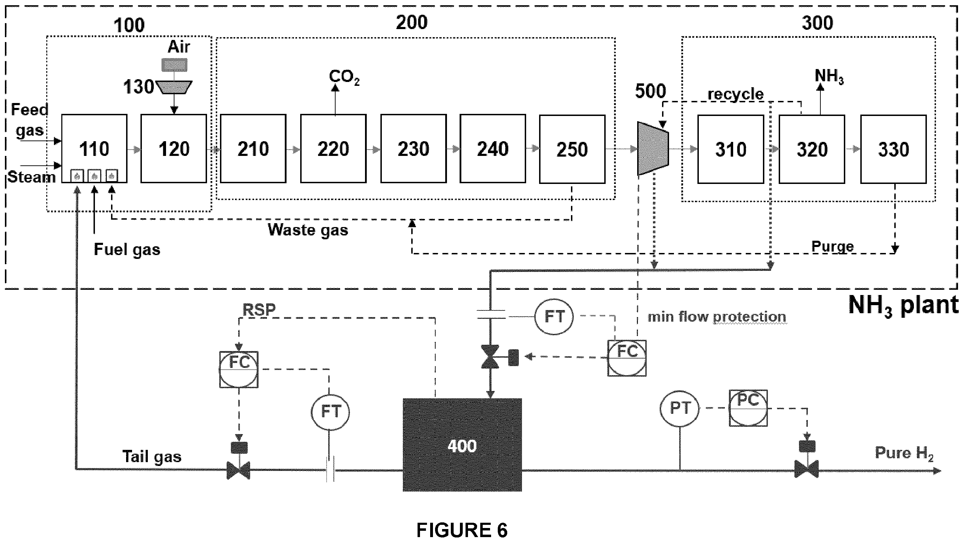

The ammonia-producing plant shown in Figure 6 corresponds to the plant of exemplary embodiment 1, wherein a slipstream of the synthesis section and/or the syngas compressor positioned between purification and ammonia synthesis section, instead of a slipstream of the syngas exiting the purification section, is provided to the hydrogen separation unit (400).

A first slipstream may be taken downstream of the first stage of the syngas compressor (500). The hydrogen concentration in the syngas is about 75 vol%, but the pressure is now 50-55 barg versus 24 barg in exemplary embodiment 1. These conditions promote the hydrogen separation process in the hydrogen separation unit (400). In addition, the pressure of the pure hydrogen flow at the outlet of the hydrogen separation unit (400) (50-55 barg) will be similar to the pressure in the hydrogen network, thus eliminating the need of installing a compressor in the pure hydrogen outlet of the hydrogen separation unit. This setup requires a complex control of the syngas compressor, particularly as the second stage of the syngas compressor will receive less gas, which must be compensated for by the anti-surge control of the compressor.

A second slipstream may be taken from the recycle stream of the ammonia production. In the ammonia converter, only a fraction from the syngas is converted into ammonia. The unreacted syngas is recycled back to the syngas compressor. This recycle stream contains hydrogen, nitrogen and ammonia. A slipstream of the recycle stream may be treated in an ammonia removal unit (not shown) and depressurized before it is provided to the hydrogen separation unit (400).

### Exemplary embodiment 6

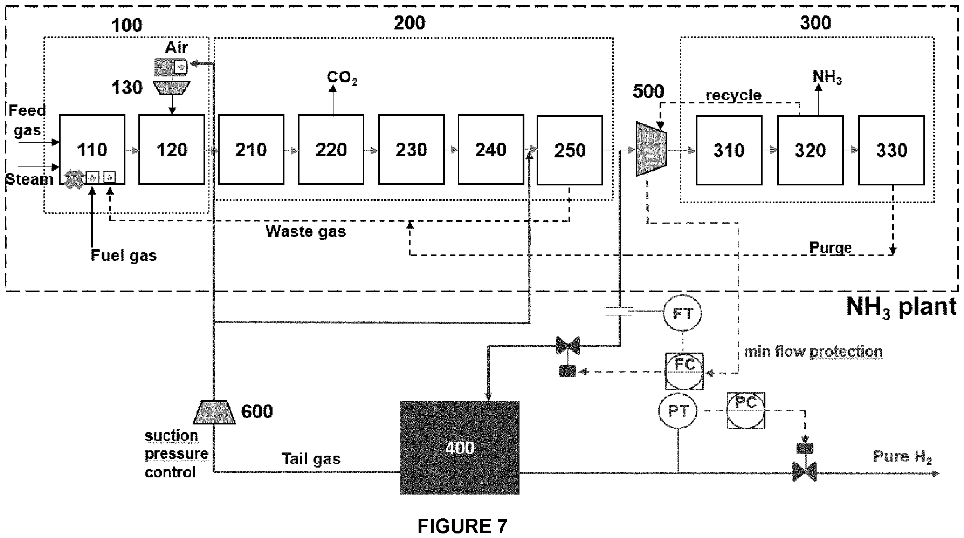

The ammonia-producing plant shown in Figure 7 corresponds to the plant of exemplary embodiment 1, but showing two other options for providing the tail gas exiting the hydrogen separation unit (400) to the ammonia plant.

In a first option, the tail gas of the hydrogen separation unit (400) is used as fuel for the compressor gas turbine of the air compressor (130), which compresses the air that is added in the reforming section. This compressor is driven by a gas turbine (CGT), which can be fueled by the tail gas of the hydrogen separation unit. In this setup, a tail gas compressor (600) is provided to pressurize the tail gas to about 8 barg.

In a second option, the tail gas of the hydrogen separation unit (400) can also be recycled back into the ammonia production process to recover the hydrogen. Re-using the hydrogen as feedstock for ammonia production is preferred over using and burning it as fuel. The tail gas can, for instance, be added upstream the cold box (250). In this setup, a compressor is provided to compress the tail gas coming from the hydrogen separation unit from 0.3 barg to, for example, 26 barg.

## Claims

1. An ammonia production system comprising
(a) a reforming section, wherein a hydrocarbon gas is converted into a hydrogen-containing process gas;
(b) a purification section, downstream of the reforming section, wherein the hydrogen-containing process gas is gradually purified and converted into a syngas, and
(c) an ammonia synthesis section, downstream of the purification section, wherein the syngas is converted into ammonia;
**characterized in that** the system further comprises
(d) a hydrogen separation unit, comprising
(i) an inlet for a hydrogen-containing gas in fluid communication with a hydrogen-containing gas stream in the purification section, with a hydrogen containing gas stream between the purification section and the ammonia synthesis section, and/or with a hydrogen-containing gas stream in the ammonia synthesis section, for providing a hydrogen-containing gas stream to the hydrogen separation unit;
(ii) a first outlet for a first hydrogen gas, and
(iii) a second outlet for a tail gas, particularly wherein the second outlet is in fluid communication with the reforming section and/or with the purification section.

2. The ammonia production system according to claim 1, further comprising a source of a second hydrogen gas, in fluid communication with the purification section, for providing the second hydrogen gas to the purification section, particularly wherein the source of the second hydrogen gas is an electrolysis unit or a hydrogen network.

3. The ammonia production plant according to claim 1 or 2, wherein the inlet for a hydrogen-containing gas of the hydrogen separation unit is in fluid communication with the syngas between the purification section and the ammonia synthesis section, in particular in fluid communication with the syngas between the purification section and the syngas compressor and/or in fluid communication with the syngas between a first stage and a second stage of the syngas compressor, for providing a part of the syngas to the hydrogen separation unit.

4. The ammonia production plant according to any one of claims 1 to 3, wherein the purification section comprises a shift conversion unit, a carbon dioxide removal unit downstream of the shift conversion unit, and optionally one or more of a methanation unit downstream of the carbon dioxide removal unit, a dryer downstream of the methanation unit, and a cold box unit downstream of the dryer,
wherein the inlet for a hydrogen-containing gas of the hydrogen separation unit is in fluid communication with a partially purified hydrogen-containing process gas downstream of the carbon dioxide removal unit, particularly between the carbon dioxide removal unit and the methanation unit, and/or downstream of the methanation unit, such as between the methanation unit and the dryer and/or between the dryer and the cold box unit, for providing a part of the partially purified hydrogen-containing process gas to the hydrogen separation unit.

5. The ammonia production plant according to any one of claims 1 to 4, wherein the ammonia synthesis section comprises an ammonia converter; an ammonia separation unit downstream of the ammonia converter and generating a hydrogen-containing recycle stream; and an inert gas removal unit generating a hydrogen-containing purge flow; and
wherein the inlet for a hydrogen-containing gas of the hydrogen separation unit is in fluid communication with the hydrogen-containing recycle stream and/or with the hydrogen-containing purge flow.

6. The ammonia production plant according to any one of claims 1 to 5, wherein:
(i) wherein the reforming section comprises a reforming unit comprising a furnace which is supplied with a fuel gas, and wherein the second outlet of the hydrogen separation unit is in fluid communication with the furnace of the reforming unit, for providing the tail gas as fuel to the furnace; and/or
(ii) the reforming section comprises an air compressor, powered by a compressor gas turbine, for providing air to a reforming unit in the reforming section, and wherein the second outlet of the hydrogen separation unit is in fluid communication with the compressor gas turbine, for providing the tail gas as fuel to the compressor gas turbine; and/or
(iii) wherein the second outlet of the hydrogen separation unit is in fluid communication with a partially purified hydrogen containing-gas stream in the purification section, particularly upstream of a cold box, for recycling the tail gas to the purification section.

7. The ammonia production plant according to any one of claims 1 to 6, further comprising one or more of:
- a pressure control system in the first outlet of the hydrogen separation unit, for maintaining the pressure in the hydrogen separation unit;
- a pressure or flow control system in the second outlet of hydrogen separation unit; for controlling the flow or pressure of the tail gas to the reforming section and/or to the purification section;
- a flow control system in the inlet of the hydrogen separation unit, particularly wherein the flow control system is configured to ensure a minimum flow of the syngas through a syngas compressor positioned between the purification section and the ammonia synthesis section; and/or
- a pressure-controlled vent line on the inlet of the hydrogen separation unit, on the first outlet of hydrogen separation unit and/or on the second outlet of the hydrogen separation unit.

8. A method for revamping an ammonia production plant, wherein the ammonia production plant comprises
(a) a reforming section, wherein a hydrocarbon gas is converted into a hydrogen-containing process gas;
(b) a purification section, downstream of the reforming section, wherein the hydrogen-containing process gas is gradually purified and converted into a syngas, and
(c) an ammonia synthesis section, downstream of the purification section, wherein the syngas is converted into ammonia;
**characterized in that** the method comprises the step of installing a hydrogen separation unit, comprising (i) an inlet for a hydrogen-containing gas in fluid communication with a hydrogen-containing gas stream in the purification section, with a hydrogen containing gas stream between the purification section and the ammonia synthesis section, and/or with a hydrogen-containing gas stream in the ammonia synthesis section; (ii) a first outlet for a first hydrogen gas, and (iii) a second outlet for a tail gas, particularly wherein the tail gas outlet is in fluid communication with the reforming section and/or with the purification section.

9. The method according to claim 8, wherein the method further comprises installing or connecting the purification section to a source of a second hydrogen gas, particularly wherein the source of second hydrogen gas is an electrolysis unit or a hydrogen network.

10. The method according to claim 8 or claim 9, wherein:
- a slip stream of the syngas between the purification section and the ammonia synthesis section is provided to the inlet of the hydrogen separation unit, in particular a slip stream of the syngas between the purification section and the syngas compressor and/or a slip stream of the syngas between a first stage and a second stage of the syngas compressor; and/or
- a slip stream of a partially purified hydrogen-containing process gas in the purification section is provided to the inlet of the hydrogen separation unit; and/or
- at least part of a hydrogen-containing recycle stream and/or a hydrogen-containing purge flow in the ammonia synthesis section is provided to the inlet of the hydrogen separation unit.

11. The method according to any one of claims 8 to 10, wherein:
- the tail gas of the hydrogen separation unit is provided as fuel to a furnace of a reforming unit in the reforming section; and/or
- the tail gas of the hydrogen separation unit is provided as fuel to a compressor gas turbine of an air compressor in the reforming section, wherein the air compressor provides air to a reforming unit; and/or
- the tail gas is recycled to the purification section.

12. The method according to any one of claims 8 to 11, further comprising the installation of one or more of:
- a pressure control system in the first outlet of the hydrogen separation unit, for maintaining the pressure in the hydrogen separation unit;
- a pressure or flow control system in the second outlet of the hydrogen separation unit; for controlling the pressure or flow of the tail gas to the reforming section and/or to the purification section;
- a flow control system in the inlet of the hydrogen separation unit, particularly wherein the flow control system is configured to ensure a minimum flow of the syngas through a syngas compressor positioned between the purification section and the ammonia synthesis section; and/or
- a pressure-controlled vent line on the inlet of the hydrogen separation unit, on the first outlet of the hydrogen separation unit and/or on the second outlet of the hydrogen separation unit.

13. A method for the combined production of ammonia and hydrogen, comprising the steps of:
(a) converting a hydrocarbon gas into a hydrogen-containing process gas in a reforming section of an ammonia production plant;
(b) gradually purifying the hydrogen-containing process gas and converting it into a syngas in a purification section of an ammonia production plant;
(c) converting the syngas into ammonia in an ammonia synthesis section of an ammonia production plant;
**characterized in that** the method further comprises the step of:
(d) providing a hydrogen-containing gas from the purification section, from a section between the purification section and the ammonia synthesis section, and/or from the ammonia synthesis section to a hydrogen separation unit, thereby obtaining a first hydrogen gas, and a tail gas, particularly wherein the tail gas is provided to the reforming section and/or the purification section.

14. The method according to claim 13, wherein, in step (d),
- a slip stream of the syngas between the purification section and the ammonia synthesis section is provided to the hydrogen separation unit, in particular a slip stream of the syngas between the purification section and the syngas compressor and/or a slip stream of the syngas between a first stage and a second stage of the syngas compressor; and/or
- a slip stream of a partially purified hydrogen-containing process gas in the purification section is provided to the hydrogen separation unit; and/or
- at least part of a hydrogen-containing recycle stream and/or a hydrogen-containing purge flow in the ammonia synthesis section is provided to the hydrogen separation unit.

15. The method according to claim 13 or 14, wherein, in step (d),
- the tail gas of the hydrogen separation unit is provided as fuel to a furnace of a reforming unit in the reforming section; and/or
- the tail gas of the hydrogen separation unit is provided as fuel to a compressor gas turbine of an air compressor in the reforming section, wherein the air compressor provides air to a reforming unit; and/or
- the tail gas of the hydrogen separation unit is recycled to the purification section.
